(19) Europäisches Patentamt
European Patent Office
Office européen des brevets

(11) EP 0 568 145 B1

(12) FASCICULE DE BREVET EUROPEEN

(45) Date de publication et mention de la délivrance du brevet:
**07.07.1999 Bulletin 1999/27**

(51) Int Cl.[6]: **G06F 7/552**, G06F 15/80

(21) Numéro de dépôt: **93201156.2**

(22) Date de dépôt: **21.04.1993**

(54) **Processeur neuronal muni de moyens pour calculer une norme ou une distance**

Neuronalprozessor mit Norm- oder Distanzrechnungsmittel

Neural processor with means for calculating a norm or a distance

(84) Etats contractants désignés:
**DE FR GB**

(30) Priorité: **29.04.1992 FR 9205283**

(43) Date de publication de la demande:
**03.11.1993 Bulletin 1993/44**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB**

(72) Inventeur: **Deville, Yannick**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 369 551** **EP-A- 375 054**

- **ELECTRONICS LETTERS vol. 26, no. 2, 18 Janvier 1990, STEVENAGE GB pages 82 - 84 R. PERFETTI 'L1 Normalisation in Neural Networks using Parallel Automatic Level Control'**
- **PROCEEDINGS OF THE IEEE vol. 78, no. 10, Octobre 1990, NEW YORK US pages 1669 - 1675 SIU ET AL 'Neural Computation of Arithmetic Functions'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un processeur neuronal comprenant des moyens de calcul neuronal qui extraient une racine d'une quantité X, ladite racine constituant soit une norme d'une donnée, soit une distance entre des données.

De telles opérations peuvent être utilisées dans des problèmes de classification en particulier pour la reconnaissance de forme, de caractères, le traitement du signal de la parole, le traitement d'images, la compression de l'information et autres.

Les données d'entrée peuvent ainsi constituer, par exemple, des données de luminance, de chrominance, de dénombrement, des mesures d'angles en reconnaissance de forme, des densités spectrales à différentes fréquences en analyse fréquentielle de signaux ou plus communément des amplitudes de signaux électriques.

Des informations sur divers types de réseaux de neurones peuvent par exemple être trouvées dans l'article de R.P. LIPPMANN, "An introduction to computing with neural nets" IEEE ASSP Magazine Avril 1987, p. 4 à 22.

Pour mettre en oeuvre certains des processus ci-dessus, il peut être nécessaire de calculer des distances entre des données représentées par des vecteurs ou de calculer des normes de vecteurs. C'est par exemple le cas pour mettre en oeuvre certains algorithmes d'apprentissage. Il est apparu avantageux de permettre au processeur neuronal de calculer lui-même une telle norme ou une telle distance. Un tel calcul pourrait être exécuté même indépendamment de son usage de tout processus cité.

A cet égard, on connaît un article intitulé : "Neural Computation of arithmetic functions" de K.Y. SIV et J. BRUCK. Proc. IEEE, vol.78, n° 10, Octobre 1990, pages 1669 - 1675.

En fait, cet article mentionne l'intérêt qu'il y a à calculer des racines carrées à l'aide d'un réseau de neurones, mais rien n'est dit sur la façon selon laquelle le réseau de neurones doit être programmé.

Parmi d'autres choses, c'est un but de l'invention de concevoir un processeur neuronal qui puisse être programmé pour calculer des normes ou des distances en effectuant un calcul de racine Q. Il est souhaitable de ne mettre en oeuvre qu'un minimum de moyens matériels opérant sur un nombre réduit de cycles de calcul. Les moyens de calcul doivent pouvoir être aisément reconfigurables pour s'adapter à des données d'entrée variées et la précision de calcul doit pouvoir être prédéterminée. Il est souhaitable que ceci soit obtenu en modifiant le moins possible l'architecture du processeur neuronal.

En conséquence, selon un premier aspect, l'invention révèle un processeur neuronal comme décrit dans la revendication 1.

Ainsi avantageusement, il est possible de choisir la dimension de la base B, donc le nombre de contributions $\Delta Q_i$ à calculer et aussi le nombre de neurones, pour obtenir une vitesse d'exécution plus ou moins élevée pour le calcul de la racine Q. On peut ainsi privilégier soit une vitesse élevée avec des moyens matériels multiples soit des moyens matériels réduits avec une vitesse d'exécution plus réduite. Ce fonctionnement par récurrence permet de réduire beaucoup le matériel nécessaire aux calculs.

Une racine Q peut être exprimée dans une base B quelconque par :

$$Q = \sum_{i=-m}^{n} q_i . B^i = q_n . B^n + q_{n-1} . B^{n-1} . . . + q_i . B^i . . . + q_1 . B^1 + q_o . B^o + q_{-1} . B^{-1} + . . . q_{-m} . B^{-m}$$

Le choix de la base et celui de la valeur de m permet de prédéterminer la précision du calcul. Pour obtenir Q à une unité près, il suffit de se limiter aux termes allant de $q_n.B^n$ à $q_o.B^o$. La valeur Q est alors la partie entière de la racine exacte de X. La donnée X doit être positive.

Selon le processeur neuronal de l'invention, on détermine par récurrence tous les termes $q_i.B^i$, $-m \le i \le n$, en commençant par le terme le plus élevé $q_n.B^n$. Ces termes sont déterminés dans la base B qui peut être quelconque. Le choix de la base B détermine la manière selon laquelle l'architecture du processeur neuronal est mise en oeuvre. La dimension B de la base B étant choisie, pour le calcul de chaque terme $q_i.B^i$ on détermine chaque valeur $q_i$, et pour cela on calcule plusieurs termes $j.B^i$ pour lesquels les valeurs j encadrent la valeur $q_i$ à déterminer. Avec une base de dimension B, les valeurs de j sont comprises entre 0 et B-1. La valeur 0 ne nécessitant pas de calcul, ces termes sont déterminés pour $1 \le j \le B-1$. Le fonctionnement du processeur neuronal va ainsi nécessiter soit au maximum B-1 neurones ou groupes de neurones fonctionnant en parallèle soit au minimum 1 neurone opérant successivement sur B-1 étapes de calcul. Des situations intermédiaires peuvent être également mises en oeuvre. Une vitesse d'exécution élevée est par exemple obtenue en faisant fonctionner B-1 neurones ou groupes de neurones en parallèle avec une grande dimension pour la base B. Une vitesse d'exécution plus lente peut être obtenue soit en faisant fonctionner un nombre limité de neurones sur plusieurs étapes consécutives soit en choisissant une dimension réduite pour la base B.

Un processeur neuronal est fondamentalement constitué de mémoires stockant des états de neurones $V_i$,

de mémoires stockant des coefficients synaptiques $C_{ij}$, d'unités calculant des sommes pondérées $\Sigma C_{ij}.V_{i,}$ et d'unités appliquant des fonctions non-linéaires de transfert auxdites sommes pondérées pour délivrer des états de neurones $V_j$. Ces derniers constituent les résultats des opérations effectuées, c'est-à-dire des résultats de normes ou de distances dans le cadre de l'invention.

Selon le processeur neuronal de l'invention lesdites mémoires et lesdites unités sont programmées par des valeurs initiales, certaines étant permanentes et d'autres étant régulièrement mises à jour pour effectuer les calculs de racine. A chaque cycle du calcul, on détermine une racine partielle QP et éventuellement un reste partiel RP qui sont mis à jour. A la fin du calcul, la dernière racine partielle QP constitue la racine finale Q et RP constitue le reste final. A chaque cycle, les résultats obtenus sont donc recyclés pour le cycle suivant.

Selon une mise en oeuvre, on met en oeuvre uniquement la racine partielle QP sans calculer le reste partiel RP. Dans ce cas, la racine partielle QP étant initialement nulle, lesdits moyens de calcul sont programmés, en vue du calcul d'une racine de degré d, pour :

a - calculer une pluralité de quantités

$$SD_j = X - (QP_{i+1} + j.B^i)^d \quad (1)$$

ladite pluralité résultant d'un nombre B-1 d'opérations effectuées par au moins un neurone pour j variant de 1 à B-1, i étant un nombre entier initialement égal à un nombre maximal prédéterminé,

b - déterminer une valeur $j = q_i$ qui vérifie :

$$\text{sign}(SD_j) \neq \text{sign}(SD_{j+1})$$

avec $SD_0 \geq 0$, $SD_B < 0$ et sign (0) = + 1

c - déterminer une contribution $\Delta Q_i = q_i.B^i$

d - déterminer une nouvelle racine partielle telle que :

$$QP_i = QP_{i+1} + \Delta Q_i$$

e - décrémenter i pour déterminer la racine Q en réitérant les opérations précédentes jusqu'à une valeur i minimale qui définit une précision prédéterminée pour Q.

Selon une autre mise en oeuvre, on utilise à la fois la racine partielle et le reste partiel RP. Dans ce cas, les moyens de calcul sont programmés pour calculer en outre un reste partiel, $RP_i = X - (QP_i)^d$, le reste partiel, initialement égal à X, étant mis à jour par récurrence tel que :

$$RP_i = RP_{i+1} + (QP_{i+1})^d - (QP_{i+1} + \Delta Q_i)^d \quad (2)$$

ou

$$RP_i = RP_{i+1} + (QP_i - \Delta Q_i)^d - (QP_i)^d \quad (3)$$

les moyens de calculs étant programmés pour mettre en oeuvre un groupe desdits premiers neurones pour :

a - calculer une pluralité de quantités $SD_j = RP_{i+1} + (QP_{i+1})^d - (QP_{i+1} + j.B^i)^d$, ladite pluralité résultant d'un nombre B-1 d'opérations pour j variant de 1 à B-1, i étant un nombre entier initialement égal à un nombre maximal prédéterminé,

b - déterminer une valeur $j = q_i$ qui vérifie :

$$\text{sign}(SD_j) \neq \text{sign}(SD_{j+1})$$

avec $SD_0 \geq 0$, $SD_B < 0$, et sign (0) = + 1

c - déterminer une contribution $\Delta Q_i = q_i.B^i$ et pour mettre en oeuvre ledit second neurone pour déterminer une nouvelle racine partielle telle que :

$$QP_i = QP_{i+1} + \Delta Q_i$$

et pour déterminer la racine Q en réitérant les opérations précédentes en décrémentant i jusqu'à une valeur i minimale qui définit une précision prédéterminée pour Q.

Les B-1 opérations de l'étape a peuvent être effectuées par B-1 neurones ou groupes de neurones programmés pour opérer en parallèle. Les B-1 opérations peuvent également être obtenues par un seul neurone ou groupe de neurones opérant sur B-1 étapes de calcul successives si la vitesse d'obtention du résultat n'est pas déterminante.

On peut également répartir les B-1 opérations sur des groupes de neurones qui effectuent un traitement partiellement parallèle et partiellement récurrent.

Selon la dimension de la base B choisie, les calculs des contributions $\Delta Q_i$ peuvent être réalisés par au minimum un seul neurone qui effectue soit les étapes a, b et c soit les étapes a, b, avec au minimum un seul autre neurone pour cumuler les contributions $\Delta Q_i$ successives au cours respectivement soit de l'étape d soit des étapes c et d.

Pour le calcul d'une racine carrée (d = 2), les équations (1), (2), (3) et (4) deviennent respectivement :

$$SD_j = X - (QP_{i+1} + j.B^i)^2 \tag{1'}$$

$$RP_i = RP_{i+1} - \Delta Q_i\ (2\ QP_{i+1} + \Delta Q_i) \tag{2'}$$

$$RP_i = RP_{i+1} - \Delta Q_i\ (2\ QP_i - \Delta Q_i) \tag{3'}$$

$$SD_j = RP_{i+1} - j.B^i\ (2\ QP_{i+1} + j.B^i) \tag{4'}$$

En opérant avec une base B de dimension 2, le calcul de la racine peut être effectué par seulement 2 neurones.

Les opérations de calcul de norme ou de distance qui ont été indiquées précédemment apparaissent généralement à l'issu de certaines étapes de traitement neuronal concernant des phases de résolution et/ou d'apprentissage. Il est donc possible d'utiliser des neurones du processeur neuronal pour effectuer un tel calcul à un moment donné et pour effectuer à un autre moment des étapes de traitement neuronal proprement dit. Il n'est donc pas nécessaire que le processeur neuronal dispose de neurones affectés spécifiquement aux opérations de calcul de racine. Cette situation est néanmoins possible, le processeur neuronal étant alors utilisé uniquement pour des calculs de racines.

En outre, il est possible que la quantité X dont on veut extraire une racine ne soit pas fournie directement au processeur neuronal, mais indirectement sous la forme de composantes de vecteurs. Dans ce cas, le processeur neuronal doit préalablement calculer la/les quantités X à partir desdites composantes des vecteurs. Les extrémités dudit vecteur peuvent également être représentées par deux vecteurs. On peut ainsi calculer des distances entre ces deux vecteurs. Dans le cas du calcul de norme, le processeur neuronal est en outre programmé pour calculer ladite quandité X de sorte qu'elle égale la somme des puissances de degré d de chacune desdites composantes.

Dans le cas du calcul de distance, le processeur neuronal est en outre programmé pour calculer ladite quantité X, pour des vecteurs pris deux à deux, de sorte qu'elle égale la somme des puissances de degré d des différences desdites composantes de même ordre.

Ces différents aspects de l'invention et d'autres encore seront apparents et élucidés à partir des modes de réalisation décrits ci-après.

L'invention sera mieux comprise à l'aide des figures suivantes, données à titre d'exemples non limitatifs, qui représentent :

Figure 1 : un schéma d'une architecture connue de processeur neuronal.

Figure 2 : une représentation schématique A d'un neurone dépourvu d'un moyen d'application d'une fonction non-linéaire, une représentation schématique B d'un neurone muni d'un moyen d'application d'une fonction non-linéaire

F, une représentation schématique C analogue à A avec des entrées $Z'_1$ et $Z'_2$ supplémentaires et une courbe D représentant une fonction non-linéaire F.

Figure 3 : un schéma d'une première mise en oeuvre des moyens de calcul pour le calcul d'une racine et d'un reste selon l'invention.

Figure 4 : un schéma d'un premier mode de réalisation pour un calcul des contributions $\Delta Q_i$ mettant en oeuvre une racine partielle QP et un reste partiel RP.

Figure 5 : un schéma d'un second mode de réalisation pour un calcul des contributions $\Delta Q_i$ mettant en oeuvre une racine partielle QP et un reste partiel RP.

Figure 6 : un schéma d'une seconde mise en oeuvre des moyens de calcul pour un calcul d'une racine Q et d'un reste R en calculant $\Delta Q_i$ à partir des racines partielles QP.

Figure 7 : un schéma d'une mise en oeuvre à trois neurones, pour un calcul d'une racine Q et d'un reste R, mise en oeuvre spécifique à B = 2 et d = 2.

Figure 8 : un schéma d'une mise en oeuvre à deux neurones, pour un calcul d'une racine Q, mise en oeuvre spécifique à B = 2 et d = 2.

Figure 9 : un schéma d'une unité pour un calcul de termes de type $2^{ki}$ dans le cas où la base B a une dimension du type $2^k$.

La Figure 1 représente un schéma simplifié d'une architecture connue de processeur neuronal 10. Des moyens d'entrée INP 13 (par exemple des registres d'entrée ou des bornes d'entrée), fournissent des données d'entrée 9 à une unité de traitement 11 qui reçoit également des coefficients synaptiques $C_{ij}$ stockés dans des moyens de stockage 12. Un coefficient synaptique $C_{ij}$ caractérise le poids de la synapse qui connecte un neurone source j à un neurone destination i. L'unité de traitement 11 reçoit également des états de neurones stockés dans des moyens de stockage 14. Lorsqu'un neurone opère en tant que neurone source, son état est référencé par $V_j$ et lorsqu'il opère en tant que neurone destination, son état est référencé par $V_i$. Pour chaque neurone destination, l'unité de traitement 11 opère des calculs :

$$POT_i = \sum_j C_{ij} . V_j$$

L'unité de traitement 11 effectue la sommation sur tous les neurones source d'indice j et fournit en sortie (connexion 8) le potentiel neuronal $POT_i$ du neurone destination i. Ce potentiel neuronal $POT_i$ est soumis à l'action d'une fonction non-linéaire NLF 15 qui fournit le nouvel état de neurone $V_i$ du neurone destination i. Ce nouvel état $V_i$ est utilisé pour mettre à jour les moyens de stockage 14 et le processus continue pour d'autres neurones. Les moyens d'application 15 de la fonction non-linéaire NLF sont représentés extérieurs au processeur neuronal 10. Cette figure 1 est seulement illustrative de l'architecture car ces moyens d'application 15 peuvent également être placés à l'intérieur du processeur neuronal 10. Ils peuvent également concerner une partie seulement des neurones. Un calculateur hôte 16 gère l'ensemble des mécanismes mis en oeuvre. Il délivre les coefficients synaptiques $C_{ij}$ et les données d'entrées 9 et reçoit des données de sortie sous forme d'états de neurones $V_i$ afin d'effectuer les calculs de racines. Par souci de simplification, d'autres organes ont été omis tels que des moyens de contrôle, des moyens d'apprentissage.

Fondamentalement, un processeur neuronal délivre des données et reçoit des données sous forme d'états de neurones. Ces données se rapportent à des grandeurs physiques. Une grandeur physique est transformée en signaux électriques représentant par exemple un nombre qui dénombre une population d'objets ou représentant par exemple une grandeur lumineuse déterminant une luminance ou une fréquence déterminant une périodicité d'un phénomène ou tout autre grandeur physique. Par exemple, le processeur neuronal peut être utilisé pour trier, dans une groupe d'éléments, des éléments de classes différentes A, B, C... Le processeur neuronal dénombre alors le nombre d'éléments appartenant à chaque classe A, B, C... Des états de neurones calculés permettent de dénombrer ces différentes classes. Les données ne sont pas toujours dimensionnées pour être introduites telles quelles dans le processeur neuronal. Au cours de certains traitements, par exemple pour l'apprentissage, il peut être nécessaire que les données d'entrée soient exprimées par rapport à une norme pour que le traitement puisse être poursuivi. L'invention se propose de déterminer cette norme. Il est ensuite possible par exemple de normaliser toutes les données en faisant que la donnée maximale ne dépasse pas cette norme. Il peut d'ailleurs s'agir de données issues d'une origine externe au processeur neuronal.

Le processeur neuronal de l'invention met en oeuvre trois types de neurones. Un premier type de neurone (Figure 2-A), qui opère en sommateur, est démuni de moyens pour appliquer une fonction non-linéaire F. Il comprend, fondamentalement, des moyens pour stocker deux coefficients synaptiques $C_1$, $C_2$ qui sont respectivement multipliés par des valeurs d'entrée $Z_1$ et $Z_2$ pour former des produits $Z_1.C_1$ et $Z_2.C_2$. Ces produits sont additionnés dans un sommateur $\Sigma$ qui délivre une valeur de sortie Z telle que :

$$Z = Z_1.C_1 + Z_2.C_2.$$

Un second type de neurone (Figure 2-B), qui opère en organe de test, comprend les mêmes éléments que ceux du premier type, avec en plus des moyens 20 (par exemple un comparateur) pour appliquer une fonction non-linéaire F. La sortie du neurone délivre ainsi une valeur Z telle que :

$$Z = F\,(Z_1.C_1 + Z_2.C_2)$$

Un troisième type de neurone (figure 2-C) est muni d'un nombre double d'entrées par rapport à celui de la figure 2-A. A un coefficient, par exemple $C_1$, sont alors associées deux entrées $Z_1$ et $Z'_1$. On peut ainsi calculer des produits tels que $C_1.Z_1.Z'_1$. Avec deux couples d'entrées, le neurone de la figure 2-C permet de déterminer :

$$Z = C_1.Z_1.Z'_1 + C_2.Z_2.Z'_2.$$

Le sommateur peut être suivi d'un organe d'application d'une fonction non-linéaire comme pour la figure 2-B. Le nombre d'entrées ou de couple d'entrées, $(Z_1, Z'_1)$, $(Z_2, Z'_2)$ peut être supérieur à 2.

La fonction non-linéaire F a une représentation fournie par la Figure 2-D. Les moyens 20 (Figure 2-B) ont une entrée e qui reçoit le signal de sortie du sommateur Σ, signal qui est comparé à une valeur nulle. Lorsque cette entrée e reçoit d'une part des signaux négatifs ou d'autre part des signaux positifs, les moyens 20 délivrent une sortie valant respectivement $- v_2$ ou $+ v_1$. Dans la majeure partie des modes de réalisation décrits ci-après les valeurs $+ v_1/-v_2$ peuvent être égales à 1/0, j/0, $B^i$/0.

<u>Première mise en oeuvre avec d = 2</u>

La Figure 3 représente schématiquement une mise en oeuvre des moyens de calculs qui sont programmés pour calculer une racine de degré d = 2. Des moyens 30 calculent successivement les contributions $\Delta Q_i = q_i.B^i$ à partir d'un reste partiel RP et d'un quotient partiel QP. Initialement QP = O et RP = X. Chaque contribution $\Delta Q_i$ sert à mettre à jour RP et QP selon :

$$QP_i = QP_{i+1} + \Delta Q_i$$

et

$$RP_i = RP_{i+1} - \Delta Q_i\,(2.QP_{i+1} + \Delta Q_i)$$

où i est un nombre entier qui décroît à partir d'une valeur maximale $i_{max}$. Ces mises à jour mettent en oeuvre un neurone NQ du premier type décrit et un neurone NR du premier ou du troisième type décrit avec 3 entrées. Chaque neurone est rebouclé sur lui-même pour opérer en accumulateur. Ce fonctionnement en boucle nécessite que chaque neurone NQ, NR soit suivi respectivement d'un registre RQ, RR qui stocke le résultat pendant un cycle élémentaire de calcul. Le registre RQ est initialisé à zéro, le registre RR est initialisé à X et les coefficients synaptiques des deux neurones sont programmés.

Les valeurs des paramètres $Z_1$, $C_1$, $Z_2$, $C_2$ sont indiquées sur le tableau I A pour le neurone NQ.

| | $Z_1$ | $C_1$ | $Z_2$ | $C_2$ |
|---|---|---|---|---|
| NQ | $QP_{i+1}$ | 1 | $\Delta Q_i$ | 1 |

TABLEAU IA

Pour le neurone NR, il est possible d'utiliser :

. soit un neurone du 1er type, avec une troisième entrée $Z_3$ et un troisième coefficient $C_3$, ce neurone étant programmé selon le tableau IB (Figure 3) :

| | $Z_1$ | $C_1$ | $Z_2$ | $C_2$ | $Z_3$ | $C_3$ |
|---|---|---|---|---|---|---|
| NR | $RP_{i+1}$ | 1 | $\Delta Q_i$ | $-2QP_{i+1}$ | $\Delta Q_i$ | $-\Delta Q_i$ |
| | $RP_{i+1}$ | 1 | $QP_{i+1}$ | $-2\Delta Q_i$ | $\Delta Q_i$ | $-\Delta Q_i$ |

TABLEAU IB

. soit un neurone du 3ème type (avec 3 entrées) qui est programmé selon le tableau IC.

| | $Z_1$ | $Z'_1$ | $C_1$ | $Z_2$ | $Z'_2$ | $C_2$ | $Z_3$ | $Z'_3$ | $C_3$ |
|---|---|---|---|---|---|---|---|---|---|
| NR | $RP_{i+1}$ | 1 | 1 | $\Delta Q_i$ | $QP_{i+1}$ | - 2 | $\Delta Q_i$ | $\Delta Q_i$ | - 1 |

TABLEAU IC

Détermination des contributions $\Delta Q_i$ avec d = 2

- Premier mode de réalisation

La Figure 4 représente un premier mode de réalisation des moyens 30 pour la première mise en oeuvre. Dans le cas général, la base dans laquelle la racine Q est exprimée a une dimension B. Selon l'invention préférentiellement, on utilise une couche de B-1 neurones $NA_j$ ($1 \leq j \leq B-1$) du 2ème type à 3 entrées fonctionnant en parallèle pour déterminer, pour i donné, un nombre B-1 de termes $SD_j = RP_{i+1} - j.B^i (2. QP_{i+1} + j.B^i)$ avec $1 \leq j \leq B-1$. Un neurone supplémentaire n'est pas nécessaire pour le calcul du terme avec j = O. Ces neurones $NA_j$ reçoivent tous $Z_1 = RP_{i+1}$, $Z_2$, et $Z_3 = QP_{i+1}$. Ils sont programmés pour déterminer les quantités $SD_j$ dont la valeur dépend de l'indice j du rang du neurone dans la couche. Les termes $SD_j$ constituent les potentiels neuronaux POT des neurones.

Pour calculer les quantités $SD_j$, les neurones NA. doivent être programmés. La détermination du terme $j.B^i (2\ QP_{i+1} + j.B^i)$ peut donner lieu à plusieurs combinaisons. Les paramètres $Z_1$, $C_1$, $Z_2$, $C_2$, $Z_3$, $C_3$ des neurones $NA_j$ peuvent être programmés selon le tableau II qui indique à titre d'exemple deux combinaisons :

| | $Z_1$ | $C_1$ | $Z_2$ | $C_2$ | $Z_3$ | $C_3$ |
|---|---|---|---|---|---|---|
| $NA_j$ | $RP_{i+1}$ | 1 | 1 | $- j^2.B^{2i}$ | $QP_{i+1}$ | $- 2j.B^i$ |
| | $RP_{i+1}$ | 1 | $B^{2i}$ | $- j^2$ | $QP_{i+1}$ | $- 2j.B^i$ |

TABLEAU II

Toutes ces quantités $SD_j$ sont testées pour déterminer leur signe et pour en déduire l'indice $j = q_i$ de la plus faible quantité $SD_j$ positive ou nulle. Pour mettre en oeuvre des tests, on utilise des neurones $NA_j$ du second type décrit précédemment, c'est-à-dire comprenant chacun un moyen d'application d'une fonction non-linéaire F aux potentiels neuronaux POT. Cette fonction F peut être une fonction $F_1$ définie par :

$$F_1\ (SD_j) = D_j = 1 \quad \text{lorsque} \quad SD_j \geq 0$$

$$F_1\ (SD_j) = D_j = 0 \quad \text{lorsque} \quad SD_j < 0$$

Ainsi pour $1 \leq j \leq q_i$ toutes les sorties $D_j$ sont à 1, et pour $q_i < j \leq B-1$ toutes les sorties $D_j$ sont à 0.

Une seconde couche de neurones $NB_j$ ($1 \leq j \leq B-1$) compare deux à deux des sorties $D_j$ et $D_{j+1}$ consécutives. Ainsi seul un neurone $NB_j$, de rang $j = q_i$, a deux entrées $D_j$ et $D_{j+1}$ différentes et seul ce neurone a une sortie égale à $q_i$, les autres neurones ayant une sortie nulle. Pour cela, les paramètres $Z_1$, $C_1$, $Z_2$, $C_2$ des neurones $NB_j$ sont programmés selon le tableau III (avec $D_B = 0$) :

| | $Z_1$ | $C_1$ | $Z_2$ | $C_2$ |
|---|---|---|---|---|
| $NB_j$ | $D_j$ | 1 | $D_{j+1}$ | - 1 |

TABLEAU III

Pour obtenir que les sorties des neurones $NB_j$ délivrent directement l'indice j de chaque neurone $NB_j$ dans la couche (lorsque $D_j \neq D_{j+1}$), on utilise des neurones du second type munis de moyens d'application d'une fonction $F_2$ ayant une réponse :

$$E_j = 0 \quad \text{lorsque} \quad e \leq 0$$

$$E_j = j \quad \text{lorsque} \quad e > 0.$$

Une troisième couche est formée par un neurone à multi-entrées NC du premier type, chacune des entrées étant programmée selon le tableau IV :

| | $Z_j$ | $C_j$ |
|---|---|---|
| NC | $E_j$ | $B^i$ |

TABLEAU IV

Selon une variante de ce premier mode de réalisation, il est possible que les coefficients $C_j$ du neurone NC soient programmés à la valeur 1 dans la mesure où les moyens d'application de la fonction non-linéaire F des neurones $NB_j$ opèrent avec une fonction $F_3$ telle que :

$$E_j = 0 \quad \text{lorsque} \quad e \leq 0$$

$$E_j = j.B^i \quad \text{lorsque} \quad e > 0.$$

Les tableaux I à IV indiquent différents types de valeurs :

- des coefficients fixes, par exemple 1, -1, qui sont chargés au moment où le processeur neuronal est utilisé pour des tâches de calcul de norme ou de distance en liaison avec la dimension de la base B,
- des valeurs égales à X, qui dépendent des données mises en oeuvre et qui sont chargées pour chaque nouvelle

donnée X,

- des coefficients contenant des termes $B^i$ qui sont modifiés à chaque cycle récurrent. Ces coefficients multiples de $B^i$ sont chargés au début de chaque cycle en commençant par les coefficients $B^i$ les plus élevés. Ils sont gérés par le calculateur hôte. La valeur de i est limitée par une valeur maximale $i_{max}$ qui détermine la capacité de traitement du processeur neuronal dans la base B considérée. Il est possible de prévoir un processeur neuronal ayant une architecture figée avec une base B déterminée (donc un nombre B-1 de neurones $NA_j$, $NB_j$) avec une valeur $i_{max}$ prédéterminée. Il est également possible de prévoir que l'utilisateur choisisse la dimension de la base B et choisisse la valeur $i_{max}$ en fonction des capacités matérielles du processeur neuronal et programme les coefficients, en conséquence. Ces choix sont à opérer selon les valeurs X mises en oeuvre.

A titre d'exemple, dans le cas où X est un nombre entier tel que $0 \le X \le 2^r - 1$, on peut choisir pour $i_{max}$ le plus petit entier tel que int $\sqrt{2^r - 1} \le B^{(i_{max}+1)} - 1$ , où "int" représente la fonction partie entière. Ainsi $i_{max}$ ne dépend pas des données X.

Second mode de réalisation

Toujours dans le cadre de la première mise en oeuvre, il peut être utile pour certaines applications de limiter le nombre de neurones qui participent au calcul d'extraction de racine carrée. La Figure 5 représente une situation où la couche de neurones $NB_j$ n'existe pas. Les neurones $NA_j$ reçoivent sur leur entrée des données correspondant toujours au tableau II et leur fonction non-linéaire et toujours la fonction F1. Toutes les sorties $D_j$ entrent dans un neurone NC du premier type qui est programmé selon le tableau IV en substituant $D_j$ à $E_j$. Le neurone NC totalise ainsi un nombre $q_i$ de contributions $B^i$ correspondant à des entrées $D_j = 1$.

Selon une variante de ce second mode de réalisation, il est possible que les coefficients $C_j$ du neurone NC soient programmées à la valeur 1 dans la mesure où les moyens d'application de la fonction non-linéaire F des neurones $NA_j$ opèrent avec une fonction $F_4$ telle que :

$$F_4(SD_j) = D_j = B^i \text{ lorsque } SD_j \ge 0$$

$$F_4(SD_j) = D_j = 0 \text{ lorsque } SD_j < 0.$$

Deuxième mise en oeuvre avec d = 2

La figure 6 représente schématiquement une deuxième mise en oeuvre dans le cas d = 2. Un neurone NR est présent comme dans la première mise en oeuvre, et il permet de disposer du reste final à la fin du calcul. Toutefois, le bloc 30 utilise maintenant uniquement le quotient partiel QP pour calculer $\Delta Q_i$. Alors, à chacune des structures (Figures 4, 5) présentées pour la première mise en oeuvre correspond une structure qui lui est identique, hormis pour les neurones $NA_j$ intervenant dans le calcul de $\Delta Q_i$. En effet, les termes $SD_j$ calculés sont différents, $SD_j = X - (QP_{i+1} + j.B^i)^2$. Pour ce calcul, on peut utiliser des neurones $NA_j$ du troisième type à 4 entrées et munis d'une fonction non-linéaire $F_1$ et les programmer par exemple selon le tableau V :

TABLEAU V

| $Z_1$ | $Z'_1$ | $C_1$ | $Z_2$ | $Z'_2$ | $C_2$ | $Z_3$ | $Z'_3$ | $C_3$ | $Z_4$ | $Z'_4$ | $C_4$ |
|---|---|---|---|---|---|---|---|---|---|---|---|
| X | 1 | 1 | $QP_{i+1}$ | $QP_{i+1}$ | -1 | $QP_{i+1}$ | $B^i$ | -2j | $B^i$ | $B^i$ | $-j^2$ |

Il est possible de réduire le nombre d'entrées des neurones en changeant la programmation et la structure, par exemple en remplaçant chaque neurone $NA_j$ par plusieurs neurones placés en cascade.

Pour la détermination de $\Delta Q_i$, on utilise préférentiellement une structure déduite du second mode de réalisation (Figure 5) présenté pour la première mise en oeuvre.

Il est possible d'utiliser des neurones $NA_j$ ayant une fonction non-linéaire $F_4$, en modifiant en conséquence les coefficients des autres neurones.

Troisième mise en oeuvre avec d = 2 (première famille)

Une troisième mise en oeuvre correspond au cas où on ne désire pas déterminer le reste R. On supprime alors le neurone NR et le registre RR de la Figure 6. Le seul résultat déterminé est la racine finale. L'intérêt de cette

troisième mise en oeuvre est que le calcul de RP peut être ignoré si RP n'est pas exploité.

Les schémas correspondant à une première famille de cette troisième mise en oeuvre sont identiques à ceux décrits pour la seconde mise en oeuvre (Figure 6) sauf qu'ils ne contiennent pas le neurone NR et le registre RR.

Pour la détermination de $\Delta Q_i$, on utilise préférentiellement une structure analogue à celle de la Figure 5, déduite de celle-ci dans son application à la deuxième mise en oeuvre.

Troisième mise en oeuvre avec d = 2 (deuxième famille)

Toujours dans le cadre de cette troisième mise en oeuvre, il est possible d'en déduire des variantes obtenues en fusionnant le neurone NC (moyens 30) avec le neurone NQ. Ceci est obtenu en :

- supprimant le neurone NC qui recevait auparavant des entrées $V_j$, égales à $E_j$ ou $D_j$ suivant le mode de réalisation, et qui avait des coefficients $C_j$ tous égaux à 1 ou à $B^i$ suivant le cas considéré,
- puis en remplaçant le neurone NQ par une neurone du premier type à B entrées, programmés suivant le tableau VI dans lequel les $V_j$ et $C_j$ correspondent à l'ancien neurone NC :

| | $Z_1$ | $C_1$ | $Z_2$ à $Z_B$ | $C_2$ à $C_B$ |
|---|---|---|---|---|
| NA | $QP_{i+1}$ | 1 | $V_j$ | $C_j$ |

TABLEAU VI

L'avantage de cette variante est que la structure comporte une couche de moins que précédemment.

Mise en oeuvre spécifique à B = 2 avec d = 2

Un cas intéressant par la simplicité des moyens matériels mis en oeuvre correspond au cas où la base B a une dimension 2. Dans ce cas, la détermination des contributions $q_i.B^i$ ne nécessite qu'un seul neurone. La Figure 7 représente un exemple de réalisation qui met en oeuvre des déterminations de racines partielles QP et de restes partiels RP. Trois neurones NA, NR, NQ sont suffisants pour déterminer la racine Q et le reste R. Les neurones NQ (1er type) et NR (1er ou 3ème type) sont suivis respectivement des registres de stockage RQ et RR. La programmation des paramètres Z, C du neurone NA (2ème type) est effectuée selon le tableau II avec j = 1. La fonction non-linéaire F, appliquée aux données issues du sommateur de NA, peut être faite comme préalablement selon les fonctions $F_1$ ou $F_4$. Dans le cas de la fonction $F_4$, les paramètres Z, C des neurones NQ et NR peuvent être programmés selon les tableaux IA, IB, IC en remplaçant $\Delta Q_i$ par SNA qui est alors égal à $\Delta Q_i$. Dans le cas de la fonction $F_1$, les paramètres Z, C du neurone NQ peuvent être programmés selon le tableau VIIA, avec SNA égal à $q_i$.

| | $Z_1$ | $C_1$ | $Z_2$ | $C_2$ |
|---|---|---|---|---|
| NQ | $QP_{i+1}$ | 1 | SNA | $2^i$ |

TABLEAU VIIA

Pour le neurone NR, il est possible d'utiliser :

. soit un neurone du 1er type avec une troisième entrée $Z_3$ et un troisième coefficient $C_3$, ce neurone étant programmé selon le tableau VIIB (Figure 7) :

| | $Z_1$ | $C_1$ | $Z_2$ | $C_2$ | $Z_3$ | $C_3$ |
|---|---|---|---|---|---|---|
| NR | $RP_{i+1}$ | 1 | SNA | $-2^{i+1}QP_{i+1}$ | SNA | $-2^{2i}.SNA$ |
| | $RP_{i+1}$ | 1 | $QP_{i+1}$ | $-2^{i+1}$ SNA | SNA | $-2^{2i}.SNA$ |

TABLEAU VIIB

. soit un neurone du 3ème type (avec 3 entrées) qui est programmé selon le tableau VIIC :

| | $Z_1$ | $Z'_1$ | $C_1$ | $Z_2$ | $Z'_2$ | $C_2$ | $Z_3$ | $Z'_3$ | $C_3$ |
|---|---|---|---|---|---|---|---|---|---|
| NR | $RP_{i+1}$ | 1 | 1 | SNA | $QP_{i+1}$ | $-2^{i+1}$ | SNA | SNA | $-2^{2i}$ |

TABLEAU VIIC

En opérant toujours avec une base de dimension égale à 2, il est encore possible, selon le schéma de la Figure 8, de réduire à deux neurones la complexité des moyens matériels. Dans ce cas, une détermination des restes partiels n'est pas mise en oeuvre. Les paramètres du neurone NA sont les mêmes que ceux du tableau V avec j = 1. Les moyens d'application peuvent également mettre en oeuvre les fonctions $F_1$ ou $F_4$ déjà décrites. Dans le cas de la fonction F4, les paramètres Z et C du neurone NQ peuvent être programmés selon le tableau IA en remplaçant $\Delta Q_i$ par SNA (= $\Delta Q_i$).
Dans le cas de la fonction F1, les paramètres Z et C du neurone NQ peuvent être programmés selon le tableau VIIA avec SNA = $q_i$.

<u>Mise en oeuvre avec d quelconque</u>

Il est possible de généraliser pour d quelconque, les mises en oeuvre exposées précédemment pour d = 2. Il suffit que chaque neurone $NA_j$ soit remplacé par un groupe de plusieurs neurones du 3ème type mis en cascade permettant de calculer au total des produits de degré d. Dans ce cas, dans chaque groupe de neurone $NA_j$, seul le dernier neurone du groupe est muni d'une fonction non-linéaire. Un groupe de neurones $NA_j$ calcule une quantité :

$$SD_j = X - (QP_{i+1} + j.B^i)^d$$

ou

$$SD_j = RP_{i+1} + (QP_{i+1})^d - (QP_{i+1} + j.B^i)^d$$

selon la mise en oeuvre.

Les quantités $SD_j$ sont ensuite transformées en $D_j$ par les fonctions non-linéaires.

Dans les mises en oeuvre où on calcule le reste partiel RP, le neurone NR est également remplacé par un groupe de neurones du 3ème type mis en cascade. Le reste partiel est alors mis à jour selon :

$$RP_i = RP_{i+1} + (QP_{i+1})^d - (QP_{i+1} + \Delta Q_i)^d$$

ou

$$RP_i = RP_{i+1} + (QP_i - \Delta Q_i)^d - (QP_i)^d$$

selon la mise en oeuvre.

Cas où $B = 2^k$

Lorsque la dimension de la base peut être écrite sous la forme $B = 2^k$, où k est un nombre entier, il est possible d'utiliser une unité qui calcule par récurrence certaines valeurs où interviennent des valeurs $B^i$. C'est par exemple le cas avec les valeurs $\pm j.B^i$ . La Figure 9 représente un tel module 80 comprenant un registre à décalage 82 à k positions suivi d'un registre 84 qui peut être initialisé par une valeur d'initialisation $2^{k.imax}$. La sortie du registre 84 délivre des coefficients $B^i = 2^{k.i}$ qui sont également réintroduits à l'entrée du registre à décalage 82. En décalant à chaque fois la donnée d'entrée de k positions, il est possible de la diviser par un facteur $2^k$ et calculer ainsi tous les coefficients $B^i$ successifs pour la mise en oeuvre des méthodes décrites. Ce module 80 peut être utilisé pour déterminer des paramètres Z et/ou C.

Dépassements

Le processeur neuronal doit stocker différents paramètres Z, C, différentes données d'entrées, X et des résultats QP, RP. Pour cela, le processeur neuronal dispose d'une capacité de traitement qui dépend des capacités maximales des registres et des mémoires.

Dans le cas général, si la capacité des registres d'états de neurones et des mémoires de coefficients synaptiques permet de stocker des mots signés de (r+1) bits, il est alors possible de traiter par exemple des données X telles que $0 \leq X \leq 2^r -1$ où X est un nombre entier. Néanmoins, lorsque les coefficients synaptiques sont à stocker sous la forme $j.B^i$, les capacités de stockage en nombre de bits par donnée et/ou coefficient sont à considérer. L'homme du métier pourra donc être conduit à choisir l'un ou l'autre des modes de programmation donnés, par exemple dans les tableaux II ou V, en fonction de la taille des registres et des mémoires disponibles dans le processeur neuronal.

Le processeur neuronal de l'invention peut être utilisée pour traiter des données X représentées par des nombres entiers ou quelconques.

Les différentes mises en oeuvre prennent toute leur importance lors de l'utilisation effective du processeur. En effet, suivant la variante considérée :

- le nombre de neurones est plus ou moins élevé,
- des entrées Z "supplémentaires", par exemple égales à $B^i$ ou à un multiple de cette valeur, sont ou ne sont pas nécessaires,
- les coefficients synaptiques sont fixes ou variables au cours d'une ou plusieurs extractions de racine,
- les fonctions de transfert des comparateurs sont fixes ou variables au cours d'une extraction de racine,
- des variables externes ou internes au fonctionnement apparaissent comme états de neurones ou comme coefficients synaptiques, et si les registres respectifs n'ont pas la même taille les valeurs maximales acceptables pour ces variables sont plus ou moins élevées c'est-à-dire, que les problèmes de dépassement doivent être traités différemment.

## Revendications

1. Processeur neuronal comprenant des moyens de c cul neuronal (11-15) qui extraient une racine Q d'une quantité X ladite racine étant du degré d etc exprimée dans une base B quelconque par

$$Q = \sum_{i=-m}^{n} q_i.B^i$$

i étant un nombre entier tel que -m < i < n, ladite racine constituant soit une norme d'une donnée soit une distance entre des données, caractérisé en ce que lesdits moyens de calcul sont programmés pour mettre en oeuvre au moins un premier neurone ($NA_1$ - $NA_{B-1}$, $NB_1$ - $NB_{B-1}$, NC) connecté en cascade avec un second neurone (NQ), pour calculer par récurrence une suite de contributions $\Delta Q_i = q_i.B^i$ à l'aide dudit premier neurone à partir d'une racine partielle QP, étant initialement QP = 0, d'une manière telle que le deuxième neurone est rebouclé en soi-même et en ce premier neuron, lesdites contributions $\Delta Q_i$ formant ensemble une expression de la racine Q dans la base arithmétique B, et pour mettre à jour par récurrence ladite racine partielle QP selon $QP_i = QP_{i+1} + \Delta Q_i$ à l'aide du deuxième neurone en totalisant lesdites contributions $\Delta Q_i$ pour délivrer la racine Q.

2. Processeur selon la revendication 1 caractérisé en ce que la racine partielle QP étant initialement nulle, lesdits moyens de calcul sont programmés, en vue du calcul d'une racine de degré d, pour mettre en oeuvre un groupe desdits premiers neurones pour :

a - calculer une pluralité de quantités

$$SD_j = X - (QP_{i+1} + j.B^i)^d$$

ladite pluralité résultant d'un nombre B-1 d'opérations pour j variant de 1 à B-1, i étant un nombre entier initialement égal à un nombre maximal prédéterminé,
b - déterminer une valeur $j = q_i$ qui vérifie :

$$\text{sign } (SD_j) \neq \text{sign } (SD_{j+1})$$

avec $SD_0 \geq 0$, $SD_B < 0$, et sign (0) = + 1
c - déterminer une contribution $\Delta Q_i = q_i.B^i$
et pour mettre en oeuvre ledit second neurone pour déterminer une nouvelle racine partielle telle que :

$$QP_i = QP_{i+1} + \Delta Q_i$$

et pour déterminer la racine Q en réitérant les opérations précédentes en décrémentant i jusqu'à une valeur i minimale qui définit une précision prédéterminée pour Q.

3. Processeur selon la revendication 1 caractérisé en ce que les moyens de calcul sont programmés pour mettre en oeuvre, en outre, un troisième neurone (NR) pour calculer un reste partiel $RP_i = X - (QP_i)^d$, le reste partiel, initialement égal à X, étant mis à jour par récurrence tel que :

$$RP_i = RP_{i+1} + (QP_{i+1})^d - (QP_{i+1} + \Delta Q_i)^d$$

ou

$$RP_i = RP_{i+1} + (QP_i - \Delta Q_i)^d - (QP_i)^d$$

et en ce que les moyens de calculs sont programmés pour mettre en oeuvre un groupe desdits premiers neurones ($NA_1$ - $NA_{B-1}$) pour :

a - calculer une pluralité de quantités $SD_j = RP_{i+1} + (QP_{i+1})^d - (QP_{i+1} + j.B^i)^d$, ladite pluralité résultant d'un nombre B-1 d'opérations pour j variant de 1 à B-1, i étant un nombre nombre B-1 d'opérations pour j variant de 1 à B-1, i étant un nombre entier initialement égal à un nombre maximal prédéterminé,
b - déterminer une valeur $j = q_i$ qui vérifie :

$$\text{sign } (SD_j) \neq \text{sign } (SD_{j+1})$$

avec $SD_0 \geq 0$, $SD_B < 0$, et sign (0) = + 1
c - déterminer une contribution $\Delta Q_i = q_i.B^i$
et pour mettre en oeuvre ledit second neurone pour déterminer une nouvelle racine partielle telle que :

$$QP_i = QP_{i+1} + \Delta Q_i$$

et pour déterminer la racine Q en réitérant les opérations précédentes en décrémentant i jusqu'à une valeur i minimale qui définit une précision prédéterminée pour Q.

4. Processeur selon la revendication 3 caractérisé en ce que dans le cas du calcul d'une racine carrée les quantités calculées $RP_i$ et $SD_j$ sont : soit

$$RP_i = RP_{i+1} - \Delta Q_i.(2.QP_{i+1} + \Delta Q_i)$$

soit

$$RP_i = RP_{i+1} - \Delta Q_i\ (2.QP_i - \Delta Q_i)$$

et

$$SD_j = RP_{i+1} - j.B^i.\ (2.QP_{i+1} + j.B^i).$$

5. Processeur selon une des revendications 2 à 4 modifiées en ce que le second neurone reçoit les valeurs $q_i$ en provenance du groupe de premiers neurones et détermine les quantités $\Delta Q_i = q_i.B^i$ en même temps qu'il effectue la détermination des nouvelles racines partielles et de la racine Q.

6. Processeur selon la revendication 1 caractérisé en ce que pour B = 2 le processeur neuronal opère soit avec deux neurones formés d'un dit premier neurone et d'un dit second neurone pour calculer la racine Q, soit avec trois neurones formés d'un dit premier neurone, d'un dit second neurone pour calculer la racine Q et d'un dit troisième neurone pour calculer un reste R.

7. Processeur caractérisé en ce que lesdits moyens de calcul sont programmables pour effectuer à un moment un calcul de racine selon une des revendications 1 à 5 et, à un autre moment, pour effectuer des tâches neuronales de résolution et/ou d'apprentissage.

8. Processeur selon une des revendications 1 à 6 caractérisé en ce que le processeur neuronal reçoit des composantes d'un vecteur, le processeur neuronal étant en outre programmé pour calculer ladite quantité X de sorte qu'elle égale la somme des puissances de degré d de chacune desdites composantes.

9. Processeur selon une des revendications 1 à 6 caractérisé en ce que le processeur neuronal reçoit des composantes de vecteurs, le processeur neuronal étant en outre programmé pour calculer, pour des vecteurs pris deux à deux, ladite quantité X de sorte qu'elle égale la somme des puissances de degré d des différences desdites composantes de même ordre.

**Patentansprüche**

1. Neuronalprozessor mit Neuronalrechenmitteln (11-15), die eine Wurzel aus einer Menge X ziehen, wobei diese Wurzel vom Grad d ist, ausgedrückt in einer beliebigen Basis B mit

$$Q = \sum_{i=-m}^{n} q_i.B^i,$$

worin i eine derartige Ganzzahl ist, daß -m < i < n ist, und diese Wurzel aus einer Datennorm oder aus einem Abstand zwischen Daten besteht, dadurch gekennzeichnet, daß die Rechenmittel zum Durchführen wenigstens eines ersten Neurons $NA_1$ - $NA_{B-1}$, $NB_1$ - $NB_{B-1}$, NC in Kaskade mit einem zweiten Neuron NQ zum Errechnen einer Folge von Beiträgen $\Delta Q_i = q_i.B^i$ mit Hilfe des ersten Neurons und ausgehend von einer Teilwurzel QP, die zunächst QP = 0 ist derart, daß das zweite Neuron nach sichselbst und nach dem ersten Neuron zurückgeschleift wird, wobei die Beiträge $\Delta Q_i$ zusammen einen Ausdruck der Wurzel Q in der arithmetischen Basis B bilden, und zum Aktualisieren der Teilwurzel QP durch Wiederholung entsprechend $QPi = QP_{i+1} + \Delta Q_i$ mit Hilfe des zweiten Neurons programmiert sind, um die Beiträge $\Delta Q_i$ zum Erzeugen der Wurzel Q zu summieren.

**2.** Prozessor nach Anspruch 1, <u>dadurch gekennzeichnet,</u> daß, wenn die Teilwurzel QP zunächst gleich Null ist, die Rechenmittel im Hinblick auf die Berechnung einer Wurzel vom Grad d

a - zum Berechnen einer Mengenanzahl

$$SD_j = X- (QP_{i+1} + j.B^i)^d ,$$

wobei die Zahl von einer Anzahl von B-1 Operationen abgeleitet wird, wobei j zwischen 1 und B-1 variiert, worin eine Ganzzahl zunächst gleich einer vorgegebenen Höchstzahl ist,
b - zum Bestimmen eines Werts $j = q_i$, der kontrolliert, ob Zeichen $(SD_j)$ (Zeichen $(SD_{j+1})$ ist, wobei $SD_0 \geq 0$, SDB < 0 und Zeichen (0) = + 1 ist,
c - zum Bestimmen eines Beitrags $\Delta Q_i = q_i.B^i$,
und zum Durchführen des zweiten Neurons zum Bestimmen einer neuen Teilwurzel, wie

$$QP_i = QP_{i+1} + \Delta Q_i$$

und zum Bestimmen der Wurzel Q beim Wiederholen der vorangehenden Operationen beim Dekrementieren von i bis zu einem Mindestwert i programmiert sind , der eine vorgegebene Präzision für Q definiert.

**3.** Prozessor nach Anspruch 1, <u>dadurch gekennzeichnet,</u> daß die Rechenmittel außerdem zum Durchführen eines dritten Neurons (NR) zum Berechnen eines Teilrestes $RP_i = X - (QP_i)^d$ programmiert sind, wobei der Teilrest, zunächst gleich X, durch derartige Wiederholung aktualisiert wird, daß

$$RP_i = RP_{i+1} + (QP_{i+1})^d - (QP_{i+1} + \Delta Q_i)^d$$

oder

$$RP_i = RP_{i+1} + (QP_1 - \Delta Q_i)^d - (QP_i)^d$$

und daß die Rechenmittel zum Einsetzen einer Gruppe der ersten Neuronen ($NA_1$ - $NA_{B-1}$)

a - zum Berechnen einer Mengenanzahl

$$SD_j = RP_{i+1} + (QP_{i+1})^d - (QP_{i+1} + j.B^i)^d$$

wobei die Zahl von einer Anzahl von B-1 Operationen für j zwischen 1 und B-1 abgeleitet wird, worin i eine Ganzzahl zunächst gleich einer vorgegebenen Höchstzahl ist,
b - zum Bestimmen eines Werts $j = q_i$, der kontrolliert,
ob Zeichen $(SD_j) \neq$ Zeichen $(SD_{j+1})$ ist,
wobei $SD_0 \geq 0$, SDB < 0 und Zeichen (0) = + 1 ist,
c - zum Bestimmen eines Beitrags $\Delta Q_i = q_i.B^i$,
und zum Einsetzen des zweiten Neurons zum derartigen Bestimmen einer neuen Teilwurzel, daß

$$QP_i = QP_{i+1} + \Delta Q_i$$

ist, und zum Bestimmen der Wurzel Q durch Wiederholung der vorangehenden Operationen und durch Dekrementierung von i bis zu einem Mindestwert i programmiert sind, der eine vorgegebene Präzision für Q definiert.

**4.** Prozessor nach Anspruch 3, <u>dadurch gekennzeichnet,</u> daß im Fall der Errechnung einer Quadratwurzel die errechneten Mengen $RP_i$ und $SD_j$ wie folgt sind: entweder

$$RP_i = RP_{i+1} - \Delta Q_i.(2.QP_{i+1} + \Delta Q_i)$$

oder

$$RP_i = RP_{i+1} - \Delta Q_i.(2.QP_{i+1} - \Delta Q_i)$$

und

$$SD_j = RP_{i+1} - j.B^i.(2\,QP_{i+1} + j.B^i).$$

**5.** Prozessor nach einem oder mehreren der Ansprüche 2 bis 4 mit einer derartigen Abwandlung, daß das zweite Neuron die Werte $q_i$ aus der Gruppe erster Neuronen empfängt und die Mengen $\Delta Q_i = q_i.B^i$ gleichzeitig mit der Bestimmung neuer Teilwurzeln und der Wurzel Q bestimmt.

**6.** Prozessor nach Anspruch 1, dadurch gekennzeichnet, daß bei B = 2 der Neuronalprozessor entweder mit zwei aus einem ersten Neuron und einem zweiten Neuron bestehenden Neuronen zum Errechnen der Wurzel Q oder mit drei aus einem ersten Neuron, einem zweiten Neuron zum Errechnen der Wurzel Q und einem dritten Neuron zum Errechnen eines Restes R bestehenden Neuronen arbeitet.

**7.** Prozessor, dadurch gekennzeichnet, daß die Rechenmittel zum Durchführen einer Wurzelerrechnung nach einem der Ansprüche 1 bis 5 zu einem Zeitpunkt und zum Durchführen von Neuronalaufgaben zum Auflösen und/oder zum Lernen programmierbar sind.

**8.** Prozessor nach einem der Ansprüche 1 bis 6, dadurch gekennzeichnet, daß der Neuronalprozessor Komponenten eines Vektors empfängt, und außerdem zum Errechnen der Menge X derart programmiert ist, daß sie gleich der Summe der Potenzen vom Grad d jeder der Komponenten ist.

**9.** Prozessor nach einem der Ansprüche 1 bis 6, dadurch gekennzeichnet, daß der Neuronalprozessor Komponenten eines Vektors empfängt, und außerdem zum Errechnen der Menge X für die je zwei und zwei genommenen Vektoren derart programmiert ist, daß sie gleich der Summe der Potenzen vom Grad d der Unterschiede der Komponenten gleicher Ordnung ist.

**Claims**

**1.** A neural processor, comprising neural calculation means (11-15) which extract a root Q of a quantity X, said root being of degree d and being expressed on an arbitrary base B as

$$Q = \sum_{i=-m}^{n} q_{i.B}{}^{i},$$

i being an integer number such that -m < i < n, said root constituting either a norm or a data or a distance between data, characterized in that said calculation means are programmed to activate at least one first neuron ($NA_1$-$NA_{B-1}$, $NB_1$-$NB_{B-1}$, NC), connected in cascade with a second neuron (NQ), in order to calculate by iteration a series of contributions $\Delta Q_i = q_i.B^i$ by means of said first neuron on the basis of a partial root Q, initially being QP = 0, in such a manner that the second neuron is retrocoupled to itself and to the first neuron, said contributions $\Delta Q_i$ together forming an expression of the root Q on the arithmetical base B, and for updating said partial root QP by iteration in conformity with $QP_i = QP_{i+1} + \Delta Q_i$ by means of the second neuron by summing said contributions $\Delta Q_i$ in order to produce the root Q.

**2.** A processor as claimed in Claim 1, characterized in that, the partial root QP initially being zero, for the calculation of a root of degree d said calculation means are programmed to activate a group of said first neurons in order to:

a- calculate a plurality of quantities

$$SD_j = X-(QP_{i+1}+j.B^i)^d,$$

said plurality resulting from a number of B-1 operations performed for j varying from 1 to B-1, i being an integer number initially equal to a predetermined maximum number,
b- determine a value $j = q_i$ which verifies:

$$sign(SD_j) \neq sign(SD_{j+1}),$$

where $SD_0 \geq 0$, $SD_B < 0$, and $sign(0) = +1$,
c- determine a contribution $\Delta Q_i = q_i.B^i$,
and to activate said second neuron in order to determine a new partial root such that:

$$QP_i = QP_{i+1}+\Delta Q_i,$$

and to determine the root Q by iteration of the preceding operations while decrementing i until there is obtained a minimum value i which defines a predetermined accuracy for Q.

**3.** A processor as claimed in Claim 1, characterized in that the calculation means are programmed so as to activate also a third neuron (NR) in order to calculate a partial remainder $RP_i = X-(QP_i)^d$, the partial remainder, initially being equal to X, being updated by iteration in such a manner that

$$RP_i = RP_{i+1} + (QP_{i+1})^d-(QP_{i+1} + \Delta Q_i)^d$$

or

$$RP_i = RP_{i+1} + (QP_i-\Delta Q_i)^d-(QP_i)^d$$

and in that the calculation means are programmed so as to activate a group of said first neurons ($NA_1$-$NA_{B-1}$) in order to:

a- calculate a plurality of quantities

$$SD_j = RP_{i+1}+(QP_{i+1})^d-(QP_{i+1}+j.B^i)^d,$$

said plurality resulting from a number of operations B-1 for j varying from 1 to B-1, i being an integer number initially equal to a predetermined maximum number,
b- determine a value $j = q_i$ which verifies:

$$sign(SD_j) \neq sign(SD_{j+1})$$

where $SD_0 \geq 0$, $SD_B < 0$, and $sign(0) = +1$,
c- determine a contribution $\Delta Q_i = q_i.B^i$,
and to activate said second neuron in order to determine a new partial root such that:

$$QP_i = QP_{i+1}+\Delta Q_i$$

and to determine the root Q by iteration of the preceding operations while decrementing i until there is obtained a minimum value i which defines a predetermined accuracy for Q.

**4.** A processor as claimed in Claim 3, characterized in that in the case of calculation of a square root the calculated quantities $RP_i$ and $SD_j$ are: either

$$RP_i = RP_{i+1} - \Delta Q_i.(2.QP_{i+1} + \Delta Q_i)$$

or

$$RP_i = RP_{i+1} - \Delta Q_i(2.QP_i - \Delta Q_i)$$

and

$$SD_j = RP_{i+1} - j.B^i.(2.QP_{i+1} + j.B^i).$$

**5.** A processor as claimed in one of the claims 2 to 4, modified in that the second neuron receives the values $q_i$ from the group of first neurons and determines the quantities $\Delta Q_i = q_i.B^i$ simultaneously with the execution of the determination of new partial roots and the root Q.

**6.** A processor as claimed in Claim 1, characterized in that for B = 2 the neural processor operates either with two neurons formed by a said first neuron and a of said second neuron in order to calculate the root Q, or with three neurons formed by a said first neuron, a said second neuron for calculating the root Q, and one of said third neuron for calculating a remainder R.

**7.** A processor, characterized in that said calculation means are programmable in order to perform at one instant a root calculation in conformity with one of the Claims 1 to 5 and to perform at another instant neural resolving and/or learning tasks.

**8.** A processor as claimed in one of the claims 1 to 6, characterized in that the neural processor receives components of a vector, the neural processor also being programmed to calculate said quantity X in such a manner that it equals the sum of powers of degree d of each of said components.

**9.** A processor as claimed in one of the Claims 1 to 6, characterized in that the neural processor receives vector components, the neural processor also being programmed to calculate said quantity X, for vectors taken two by two, in such a manner that it is equal to the sum of powers of the degree d of the differences between said components of the same order.

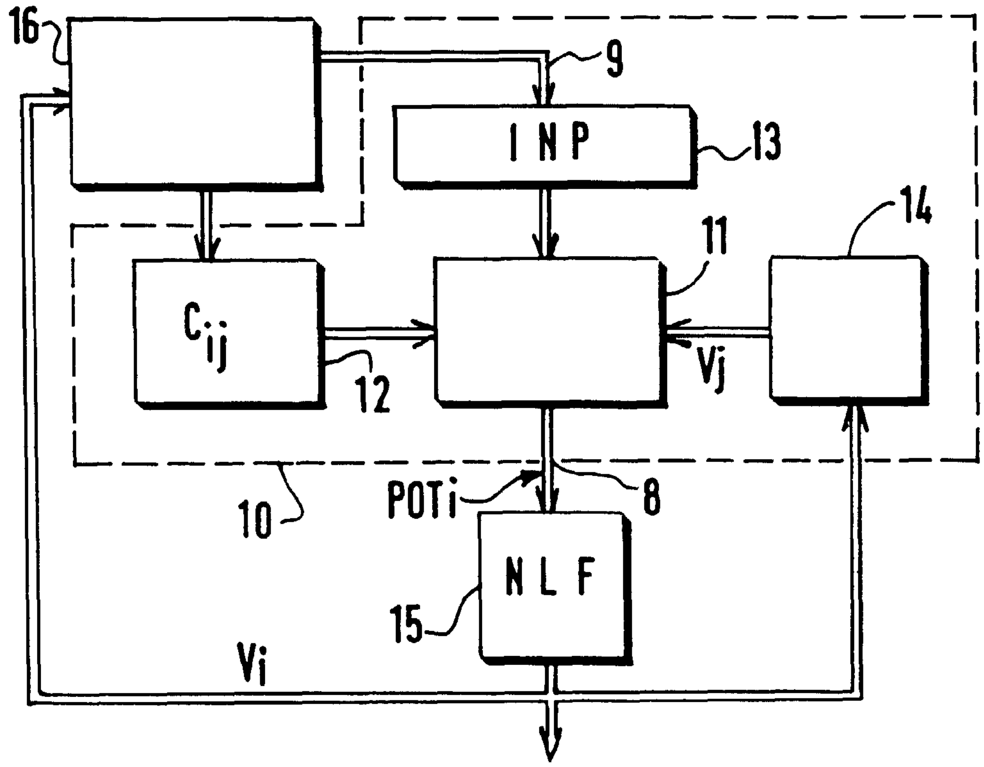
16
9
I N P
13
14
11
$C_{ij}$
12
$V_j$
10
POTi
8
N L F
15
$V_i$

FIG.1

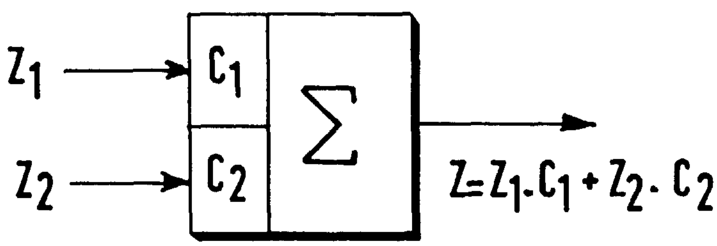
$Z_1$
$Z_2$
$C_1$
$C_2$
Σ
$Z=Z_1.C_1+Z_2.C_2$

A

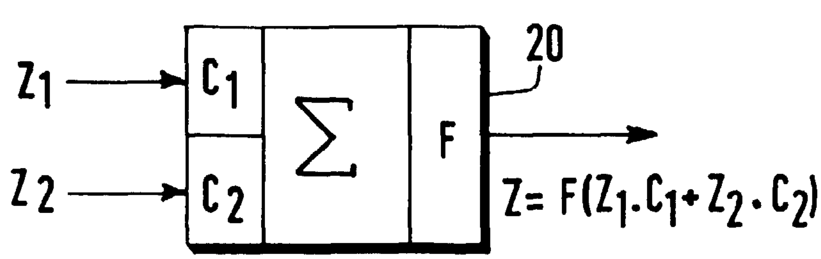
$Z_1$
$Z_2$
$C_1$
$C_2$
Σ
F
20
$Z= F(Z_1.C_1+Z_2.C_2)$

B

FIG.2

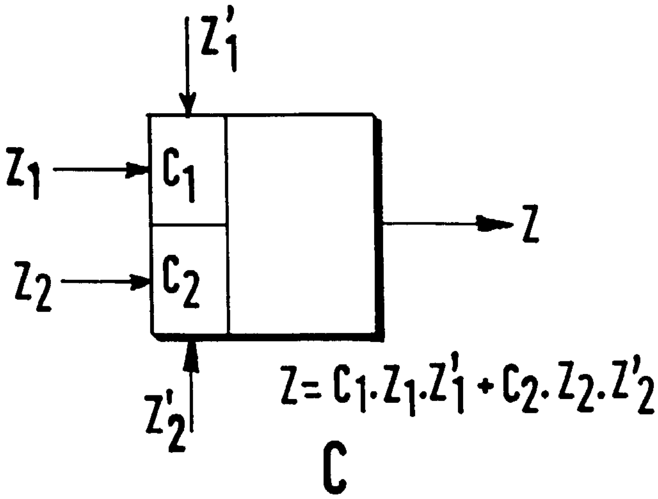
Z'1
Z1
C1
Z2
C2
Z
Z'2
Z= C1.Z1.Z'1 + C2.Z2.Z'2
C

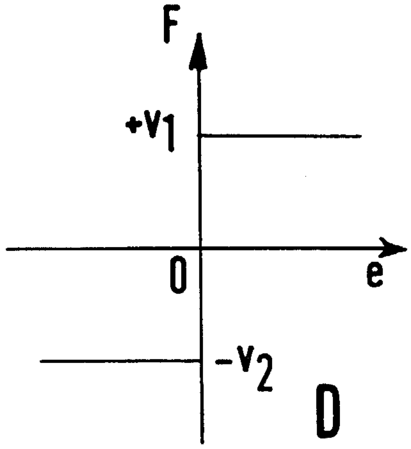
F
+V1
0
e
-V2
D

FIG.2

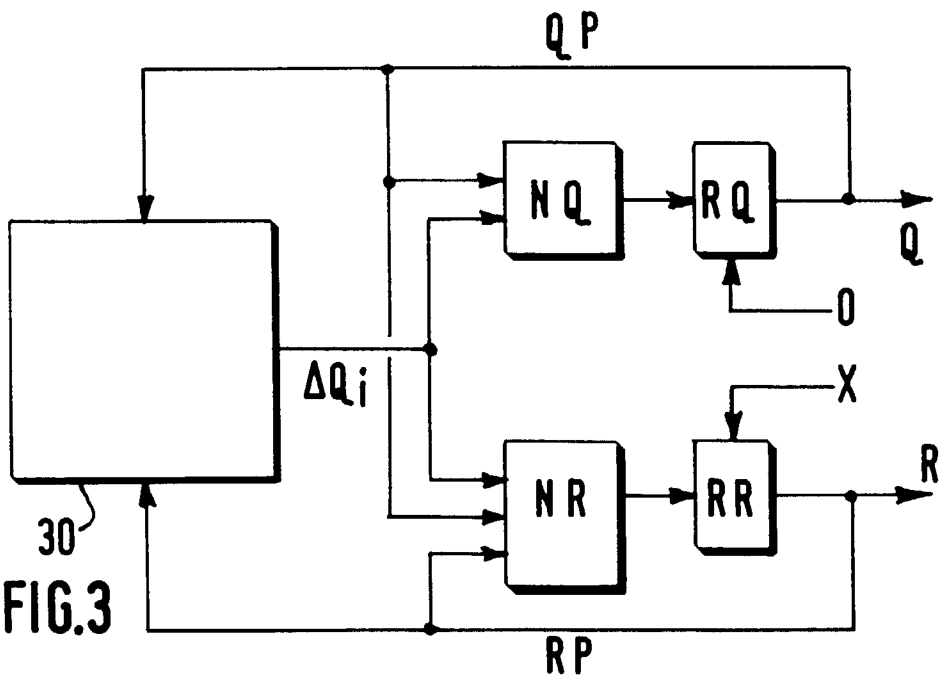
QP
NQ
RQ
Q
0
ΔQi
X
NR
RR
R
30
RP

FIG.3

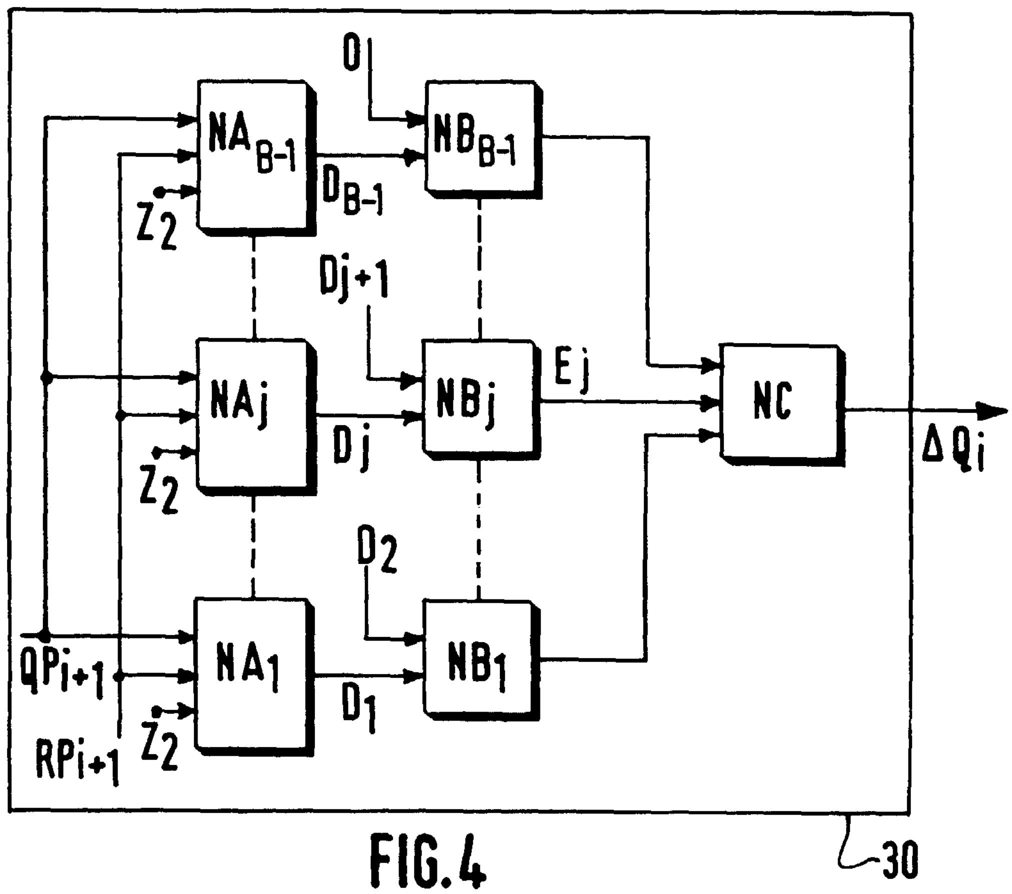
NA$_{B-1}$
NB$_{B-1}$
O
D$_{B-1}$
Z$_2$
Dj+1
NAj
NBj
Ej
NC
ΔQi
Dj
Z$_2$
D$_2$
NA$_1$
NB$_1$
QPi+1
D$_1$
RPi+1
Z$_2$
30

FIG.4

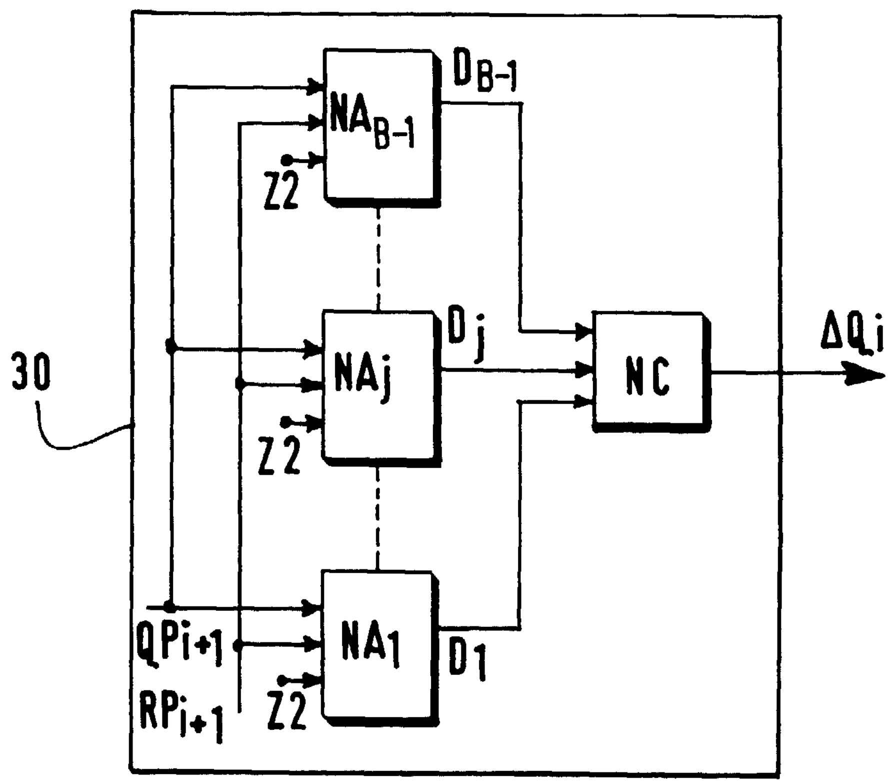
D$_{B-1}$
NA$_{B-1}$
Z2
Dj
NAj
NC
ΔQi
30
Z2
NA$_1$
QPi+1
D$_1$
RPi+1
Z2

FIG.5

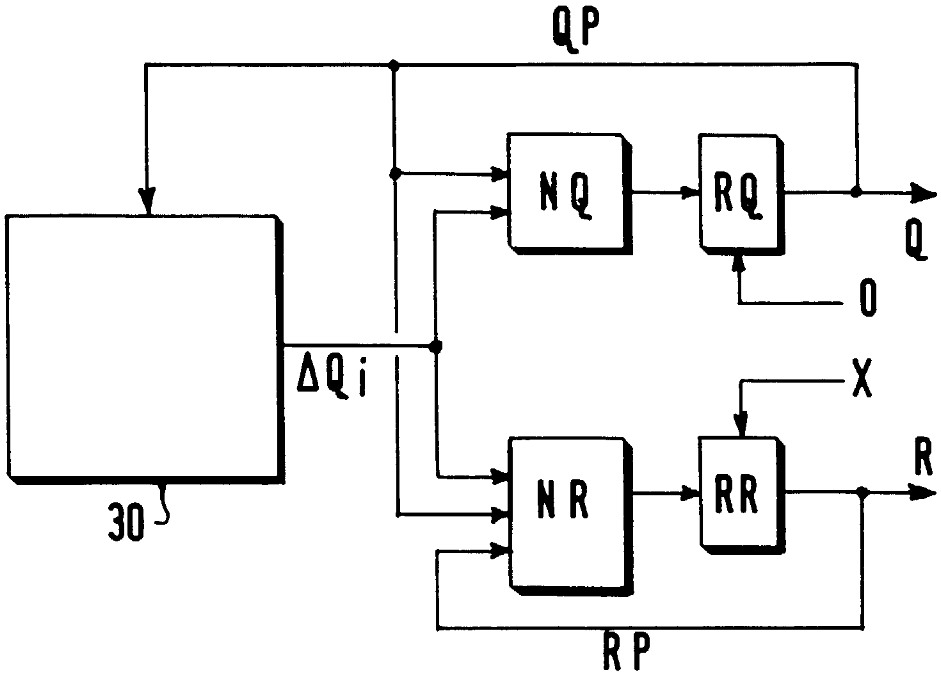


FIG.6

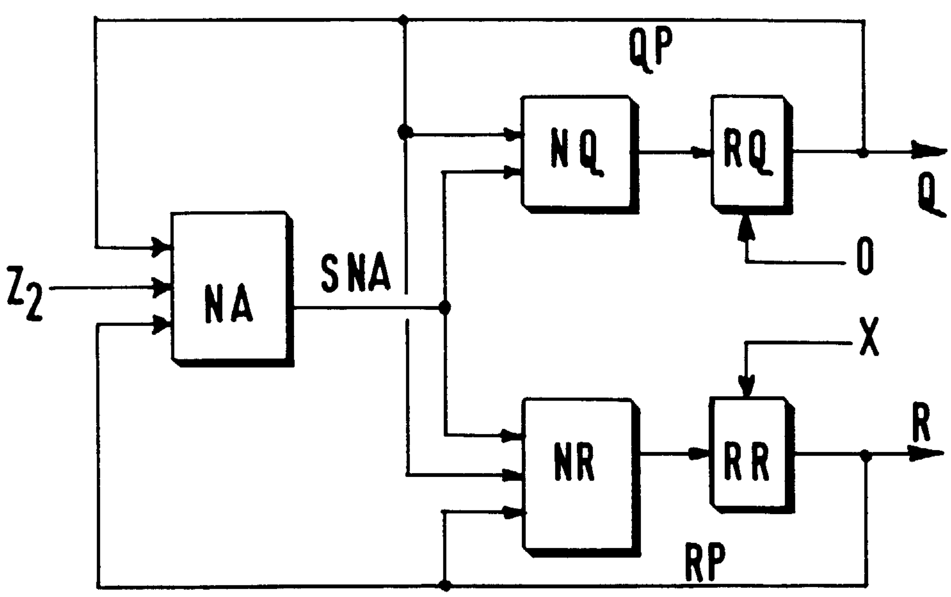


FIG.7

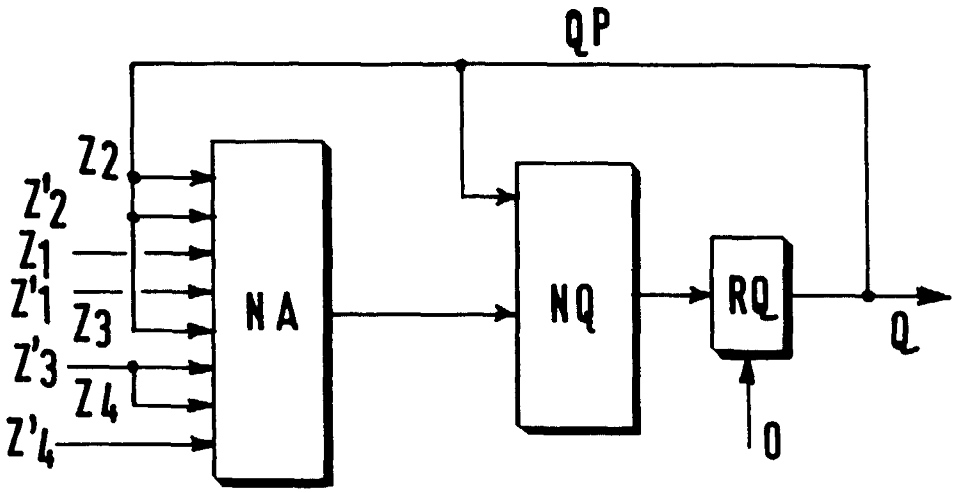


FIG.8

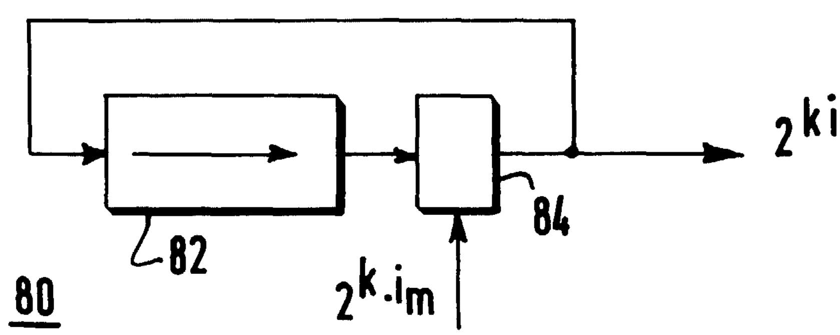


FIG.9